# EUROPEAN PATENT SPECIFICATION

(11) **EP 1 757 465 B1**
(45) Date of publication and mention of the grant of the patent: **27.07.2011**
(21) Application number: 05730540.1
(22) Date of filing: 14.04.2005
(51) Int. Cl.: B60C 23/04, H01Q 1/02, H01Q 1/32

(54) **TIRE CONDITION DETECTING DEVICE**
VORRICHTUNG ZUR ERFASSUNG DES REIFENZUSTANDS
DISPOSITIF DE DÉTECTION DE LA CONDITION DU PNEU

(30) Priority: 14.04.2004 JP 2004118745
(43) Date of publication of application: 28.02.2007
(73) Proprietor: THE YOKOHAMA RUBBER CO., LTD., Tokyo 105-8685 (JP)
(72) Inventor: UEHARA, Tsuyoshi, c/o The Yokohama Rubber Co., Ltd., Kanagawa, Hiratsuka-shi 2548601 (JP); SHIMURA, Kazuhiro, c/o The Yokohama Rubber Co., Ltd., Kanagawa, Hiratsuka-shi 2548601 (JP)
(74) Representative: HOFFMANN EITLE
(86) International application number: PCT/JP2005/007247
(87) International publication number: WO 2005/100052

(56) References cited:
- EP-A2- 1 004 461
- DE-A1- 19 963 004
- JP-A- 10 056 309
- JP-A- 61 232 967
- JP-A- 2003 160 029
- JP-A- 2003 163 522
- JP-A- 2003 309 410
- JP-A- 2004 070 865
- JP-U- 1 151 608

## Description

### TECHNICAL FIELD

The present invention relates to a device that detects a tire condition such as an inner pressure or temperature of a pneumatic tire.

### TECHNICAL BACKGROUND

Recently, with an increase in safety awareness, there have been proposed various devices that detect with sensors physical values showing the service conditions of a tire such as an inner pressure and temperature of the tire during running to inform a driver of the values or to give a driver a warning (see Japanese Patent Application Kokai Publication No. 2003-246221 and Japanese Patent Application Kokai Publication No. 2003-237327, for example).

Such devices that detect the conditions of a tire are arranged such that a radio wave of a signal detected by a sensor placed in the cavity of the tire mounted on a vehicle is received via an antenna mounted on the vehicle body side. Since the strength of the radio wave allowed by Japanese legislation is very weak, the antenna mounted on the vehicle body side is attached to a part of the vehicle body that is a location as near as possible to the tire and faces the tread surface of the tire in order to gain good sensitivity. Therefore, in a snow area, if snow and/or ice splashed from a road surface by the tire rotating adhere to the antenna or an antenna case containing the antenna in winter, the reception of the radio wave is impaired; a problem with the antenna arises such as poor reception.

JP 2003 309410 A discloses an integrated antenna that may be mounted to a vehicle body in a recessed part formed in the vehicle body. A cover encloses the recessed part, which cover may be provided with electrically heated wire.

### SUMMARY OF THE INVENTION

According to a first aspect of the present invention, there is provided a tire condition detection device in which a sensor detects a condition of a tire mounted on a vehicle, and a radio wave of a detection signal of the tire condition is received via an antenna contained in an antenna case mounted on a body side of the vehicle, comprising: heating means that can heat the antenna case; and processing means for processing the detection signal received via the antenna, the processing means making the heating means turned on when the processing means loses the detection signal.

As described above, the heating means that can heat the antenna case containing the antenna is provided, whereby even if snow and/or ice splashed from a road surface by the tire rotating adhere to the antenna case, the snow and/or ice can be easily melted; therefore, the reception of the radio wave by the antenna is not impaired by the snow and/or ice adhering the antenna case. Accordingly, the poor reception of the antenna arising from adhesion of snow and/or ice can be prevented.

According to a second aspect of the present invention there is provided a tire condition detection device in which a sensor detects a condition of a tire mounted on a vehicle, and a radio wave of a detection signal of the tire condition is received via an antenna directly mounted on a body side of the vehicle, comprising: heating means that can heat the antenna, wherein the heating means comprises a heat generation element that can heat the antenna; and processing means for processing the detection signal received via the antenna, the processing means making the heating means turned on when the processing means loses the detection signal.

As described above, when the antenna is directly mounted on the vehicle body side, the heating means that can heat the antenna is provided, whereby snow and/or ice adhering to the antenna can be melted; thus the poor reception of the antenna arising from adhesion of snow and/or ice thereto can be improved.

Embodiments of the present invention are able to provide a tire condition detection device capable of improving the poor reception of an antenna arising from adhesion of snow and/or ice thereto.

### BRIEF DESCRIPTION OF THE DRAWINGS

To enable a better understanding of the present invention, and to show how the same may be carried into effect, reference will now be made, by way of example only, to the accompanying drawings, in which:-
FIG. 1 is a block diagram showing an embodiment of a tire condition detection device according to the present invention;
FIG. 2 is an explanatory drawing showing a tire side unit and an antenna case containing an antenna in a state where they are mounted on a vehicle;
FIG. 3 is an explanatory drawing of the inside of the antenna case showing an example of a heat generation element;
FIG. 4 is an explanatory drawing of the inside of the antenna case showing another example of the heat generation element; and
FIG. 5 is an explanatory drawing showing still another example of the heat generation element.

### DETAILED DESCRIPTION

An embodiment of the present invention will be described in detail below with reference to the attached drawings.

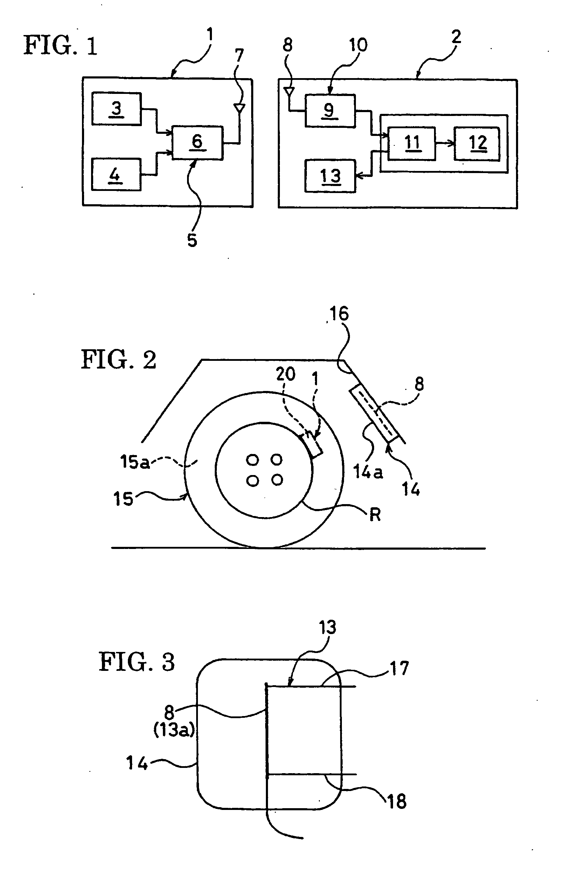

Referring to FIG. 1, there is shown an embodiment of a tire condition detection device according to the present invention; reference numeral 1 denotes a tire side unit to be mounted on a tire side of a vehicle, and reference numeral 2 denotes a vehicle body side unit to be mounted on a body side of the vehicle.

The tire side unit 1 includes a pressure sensor 3 for detecting a pressure in the cavity 15a of a tire 15 (see FIG. 2) mounted on the vehicle, a temperature sensor 4 for detecting a temperature in the cavity 15a of the tire 15, transmitting means 5 for transmitting a detected signal by each of the sensors 3 and 4 to the vehicle body side unit 2, and a battery (not shown) for supplying electric power to the sensors 3 and 4 and the transmitting means 5. The transmitting means 5 comprises a transmitter 6 and an antenna 7. The pressure sensor 3 and the temperature sensor 4 are connected to the transmitting means 5, respectively. The pressure sensor 3, temperature sensor 4, transmitting means 5 and battery are contained in a case 20 (see FIG. 2), and the case 20 is designed to be fixed to a rim R in the tire 15 with a band (not shown) or the like.

The vehicle body side unit 2 includes receiving means 10 having a metallic antenna 8 for receiving a radio wave of the detected signal by each of the sensors 3 and 4 transmitted from the antenna 7 and a receiver 9, processing means 11 for processing the detected signal, display means 12 for displaying pressure and temperature values of the detected signals processed by the processing means 11, and heating means 13 that can heat an antenna case 14 described later. The receiving means 10 is connected to the processing means 11, which is connected to each of the display means 12 and heating means 13. The electric power supply of the vehicle is used for each means of the vehicle body side unit 2 as an operation power source.

As shown in FIG. 2, the antenna 8, which is contained in the antenna case 14 formed of resin, is designed to be mounted on a part 16 of the vehicle facing the tire 15.

The processing means 11 determines whether a value of the signal of temperature detected by the temperature sensor 4 is equal to or less than a predetermined temperature or not, and if the processing means determines that it is equal to or less than the predetermined temperature, the processing means makes the heating means 13 turned on to heat the antenna case 14. If the vehicle has a temperature sensor that detects outside air temperature, a value of the signal of temperature detected by the temperature sensor of the vehicle may be employed instead of the signal value of temperature detected by the temperature sensor 4. Alternatively, a temperature sensor is attached to the antenna case 14 or antenna 8, and a value of the signal temperature detected by this temperature sensor may be used.

The processing means 11 is preferably structured such that the processing means works in conjunction with a wiper of the vehicle, and only in the case where the wiper switch of the vehicle is on, the processing means makes the heating means 13 turned on. Even if the temperature is low, there is a case such that it does not snow but is a fine weather; therefore, by connecting to the wiper, the heating means 13 can be prevented from unnecessarily working during a fine weather.

The heating means 13 heats the surface 14a of the antenna case 14 to melt snow and/or ice adhering to the surface 14a; the heating means may employ any structure if the structure can melt the snow and ice adhering thereto; the heating means 13 having a heat generation element shown in each of FIGS. 3 to 5 is preferably used.

The heating means 13 shown in FIG. 3 uses the metallic antenna 8 as a heat generation element 13a; conductive wires 17 and 18 connected to a power supply are connected to the opposing ends of the antenna 8. Direct current flows in the antenna 8 via the conductive wires 17 and 18 to cause the metallic antenna 8 to generate heat, thereby allowing the surface 14a of the antenna case 14 to be heated.

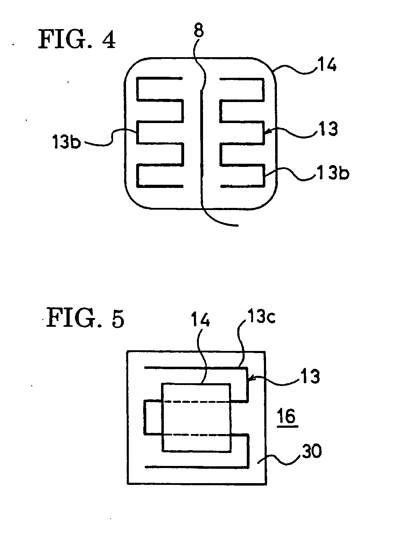

The heating means 13 shown in FIG. 4 has heat generation elements 13b comprising nichrome wires or the like, that are placed inside the antenna case 14; the heat generation elements 13b generate heat by flowing direct current in the heat generation elements 13b via conductive wires (not shown), thereby enabling the surface 14a of the antenna case 14 to be heated. The heat generation elements 13b may be mounted on the surface 14a of the antenna case 14 in the alternative of the inside of the antenna case 14.

The heating means 13 shown in FIG. 5 has a heat generation element 13c comprising a nichrome wire or the like to be attached to the vehicle part 16 on which the antenna case 14 is mounted. The heat generation element 13c is provided on a plate member 30, and the plate member 30 is designed to be mounted on the vehicle part 16. The antenna case 14 is attached to the plate member 30; the heat generation element 13c generates heat by flowing direct current in the heat generation element 13c via conductive wires (not shown), thereby enabling the whole antenna case 14 to be heated.

According to the present invention, since the antenna case 14 containing the antenna 8 can be heated by the heating means 13, even if snow and/or ice splashed from a road surface by the tire 15 rotating adhere to the antenna case 14, the snow and/or ice can be melted, thus preventing the antenna 8 from impairing the reception of the radio wave.

Since the heating means 13 can automatically be turned on by the processing means 11, a driver is not bothered with the operation of the heating means 13.

The above embodiment shows that the antenna 8 is contained in the antenna case 14 and attached to the vehicle part 16; however, the tire condition detection device of the present invention may be one designed such that the antenna 8 is not contained in the antenna case 14 but is directly attached to the vehicle part 16.

In this case, as snow and/or ice adhere to the antenna 8, the heating means 13 is structured so as to be able to heat the antenna 8; the structure may be any one that can melt the snow and/or ice adhering to the surface of the antenna 8.

For example, the heating mans 13 shown in FIG. 3, that is, the heating means using the antenna 8 itself as a heat generation element 13a by flowing electric current in the antenna 8, or heating means having a heat generation element disposed near the antenna 8 for heating the antenna 8 such as one in which, as shown in FIG. 5, a heat generation element 13c comprising a nichrome wire or the like placed on the vehicle part 16 can heat the antenna 8, is preferably mentioned.

The processing means 11 may be arranged such that the heating means 13 is turned on when the processing means loses the detected signal received via the antenna 8 instead of the above structure. Alternatively, the processing means may be arranged such that a switch for turning on the heating means 13 is provided in a cockpit, and the heating means 13 is turned on by operation of the switch by a driver.

In the above embodiment, as the tire condition detection device, there is exemplified a device in which pressure and temperature of the tire 15 are detected, and the radio waves of the detected signals are received via the antenna 8 mounted on the vehicle body side; however, the tire condition detection device of the present invention may be any one in which a physical value showing the service conditions of a tire mounted on a vehicle is detected by a sensor, and the detected signal is received on the vehicle body side via the antenna 8.

### INDUSTRIAL APPLICABILITY

The tire condition detection device of the present invention having the aforementioned excellent effects can be very effectively utilized as a tire condition detection device that is to be mounted on a vehicle used in a snow area.

## Claims

1. A tire condition detection device in which a sensor (3, 4) detects a condition of a tire (15) mounted on a vehicle, and a radio wave of a detection signal of the tire condition is received via an antenna (8) contained in an antenna case (14) mounted on a body side of the vehicle, comprising:
heating means (13) that can heat the antenna case; and
processing means (11) for processing the detection signal received via the antenna (8), the processing means making the heating means (13) turned on when the processing means loses the detection signal.

2. A tire condition detection device according to claim 1, wherein the heating means (13) comprises a heat generation element (13a, 13b, 13c) that can heat the antenna case (14).

3. A tire condition detection device according to claim 2, wherein the heat generation element (13a) is the antenna (8) that can generate heat by flowing electric current therein.

4. A tire condition detection device according to claim 2, wherein the heat generation element (13b) is mounted on the antenna case (14).

5. A tire condition detection device according to claim 2, wherein the heat generation element (13c) is designed to be attached to a part of the vehicle on which the antenna case is mounted.

6. A tire condition detection device in which a sensor (3, 4) detects a condition of a tire (15) mounted on a vehicle, and a radio wave of a detection signal of the tire condition is received via an antenna (8) directly mounted on a body side of the vehicle, comprising:
heating means (13) that can heat the antenna, wherein the heating means (13) comprises a heat generation element (13b) that can heat the antenna (8); and
processing means (11) for processing the detection signal received via the antenna (8), the processing means making the heating means (13) turned on when the processing means loses the detection signal.

7. A tire condition detection device according to claim 6, wherein the heat generation element (13a) is the antenna (8) that can generate heat by flowing electric current therein.

8. A tire condition detection device according to claim 6, wherein the heat generation element (13b) is designed to be mounted near the antenna (8).

## Patentansprüche

1. Reifenzustandsbestimmungseinrichtung, bei der ein Sensor (3, 4) einen Zustand eines Reifens (15), der an einem Fahrzeug angebracht ist, bestimmt, und eine Funkwelle eines Bestimmungssignals des Reifenzustands von einer Antenne (8) empfangen wird, die in einem Antennengehäuse (14) enthalten ist, das an einer Fahrzeugchassisseite angebracht ist, mit:
einer Erwärmeinrichtung (13), die das Antennengehäuse erwärmen kann, und
einer Verarbeitungseinrichtung (11) zum Verarbeiten des Bestimmungssignals, das von der Antenne (8) empfangen wurde, wobei die Verarbeitungseinrichtung dafür sorgt, dass die Erwärmeinrichtung (13) eingeschaltet wird, wenn die Verarbeitungseinrichtung das Bestimmungssignal verliert.

2. Reifenzustandsbestimmungseinrichtung nach Anspruch 1, bei der die Erwärmeinrichtung (13) ein Wärmeerzeugungselement (13a, 13b, 13c) aufweist, welches das Antennengehäuse (14) erwärmen kann.

3. Reifenzustandsbestimmungseinrichtung nach Anspruch 2, bei der das Wärmeerzeugungselement (13a) die Antenne (8) ist, die Wärme erzeugen kann, indem ein elektrischer Strom darin fließt.

4. Reifenzustandsbestimmungseinrichtung nach Anspruch 2, bei der das Wärmeerzeugungselement (13b) an dem Antennengehäuse (14) angebracht ist.

5. Reifenzustandsbestimmungseinrichtung nach Anspruch 2, bei der das Wärmeerzeugungselement (13c) dafür ausgestaltet ist, an einem Teil des Fahrzeugs befestigt zu werden, an dem das Antennengehäuse angebracht ist.

6. Reifenzustandsbestimmungseinrichtung, bei der ein Sensor (3, 4) einen Zustand eines Reifens (15), der an einem Fahrzeug angebracht ist, bestimmt, und eine Funkwelle eines Bestimmungssignals des Reifenzustands von einer Antenne (8) empfangen wird, die direkt an einer Fahrzeugchassisseite angebracht ist, mit:
einer Erwärmeinrichtung (13), welche die Antenne erwärmen kann, wobei die Erwärmeinrichtung (13) ein Wärmeerzeugungselement (13b) aufweist, das die Antenne (8) erwärmen kann, und
einer Verarbeitungseinrichtung (11) zum Verarbeiten des Bestimmungssignals, das von der Antenne (8) empfangen wurde, wobei die Verarbeitungseinrichtung dafür sorgt, dass die Erwärmeinrichtung (13) eingeschaltet wird, wenn die Verarbeitungseinrichtung das Bestimmungssignal verliert.

7. Reifenzustandsbestimmungseinrichtung nach Anspruch 6, bei der das Wärmeerzeugungselement (13a) die Antenne (8) ist, die Wärme erzeugen kann, indem ein elektrischer Strom darin fließt.

8. Reifenzustandsbestimmungseinrichtung nach Anspruch 6, bei der das Wärmeerzeugungselement (13b) dafür ausgestaltet ist, in der Nähe der Antenne (8) angebracht zu werden.

## Revendications

1. Dispositif de détection de la condition d'un bandage dans lequel un capteur (3, 4) détecte une condition d'un bandage (15) monté sur un véhicule, et une onde radio d'un signal de détection de la condition du bandage est reçue par une antenne (8) se trouvant dans un boîtier d'antenne (14) monté sur un côté carrosserie du véhicule, comprenant:
un moyen de chauffage (13) apte à chauffer le boîtier d'antenne; et
un moyen de traitement (11) pour le traitement du signal de détection reçu par l'antenne (8), le moyen de traitement mettant en service le moyen de chauffage (13) lorsque le moyen de traitement perd le signal de détection.

2. Dispositif de détection de la condition d'un bandage selon la revendication 1, dans lequel le moyen de chauffage (13) comprend un élément de génération de chaleur (13a, 13b, 13c) apte à chauffer le boîtier d'antenne (14).

3. Dispositif de détection de la condition d'un bandage selon la revendication 2, dans lequel l'élément de génération de chaleur (13a) est l'antenne (8) apte à produire de la chaleur en faisant passer du courant électrique dans celui-ci.

4. Dispositif de détection de la condition d'un bandage selon la revendication 2, dans lequel l'élément de génération de chaleur (13b) est monté sur le boîtier d'antenne (14).

5. Dispositif de détection de la condition d'un bandage selon la revendication 2, dans lequel l'élément de génération de chaleur (13c) est conçu pour être fixé à une partie du véhicule sur laquelle le boîtier d'antenne est monté.

6. Dispositif de détection de la condition d'un bandage, dans lequel un capteur (3, 4) détecte une condition d'un bandage (15) monté sur un véhicule, et une onde radio d'un signal de détection de la condition du bandage est reçu par une antenne (8) montée directement sur un côté carrosserie du véhicule, comprenant
un moyen de chauffage (13) apte à chauffer l'antenne, où le moyen de chauffage (13) comprend un élément de génération de chaleur (13b) apte à chauffer l'antenne (8); et
un moyen de traitement (11) pour le traitement du signal de détection reçu par l'antenne (8), le moyen de traitement mettant le moyen de chauffage (13) en service lorsque le moyen de traitement perd le signal de détection.

7. Dispositif de détection de la condition d'un bandage selon la revendication 6, dans lequel l'élément de génération de chaleur (13a) est l'antenne (8) qui peut produire de la chaleur en faisant passer un courant électrique dans celui-ci.

8. Dispositif de détection de la condition d'un bandage selon la revendication 6, dans lequel l'élément de génération de chaleur (13b) est conçu pour être installé près de l'antenne (8).
